# EUROPEAN PATENT APPLICATION

(11) **EP 4 664 689 A1**
(43) Date of publication of application: **17.12.2025**
(21) Application number: 24753302.9
(22) Date of filing: 05.02.2024
(51) Int. Cl.: H01R 39/00, H01R 39/28

(54) **ROTARY CONNECTOR**

(30) Priority: 10.02.2023 JP 2023018818
(71) Applicant: Eagle Industry Co., Ltd., Minato-ku Tokyo 105-8587 (JP)
(72) Inventor: FURUKAWA, Yasunari, Tokyo 105-8587 (JP); ETO, Hayata, Tokyo 105-8587 (JP); HAYATA, Mamoru, Tokyo 105-8587 (JP); SAWADA, Hiroshi, Akishima-shi, Tokyo 196-0034 (JP)
(74) Representative: WSL Patentanwälte Partnerschaft mbB
(86) International application number: PCT/JP2024/003695
(87) International publication number: WO 2024/166859

(57) **Abstract**

A rotary connector in which relative movement between a rotary spacer and an outer peripheral electrode or an inner peripheral electrode is favorable is provided. A rotary connector 1 includes an annular outer peripheral electrode 30, an inner peripheral electrode 2 inserted into the outer peripheral electrode 30 and arranged so as to be turnable relatively to the outer peripheral electrode 30, a plurality of roller current collectors 4 arranged in the circumferential direction between the outer peripheral electrode 30 and the inner peripheral electrode 2, the roller current collectors being in contact with the outer peripheral electrode 30 and the inner peripheral electrode 2, rotary spacers 5 each of which is arranged between the roller current collectors 4, and a pair of guide plates 31, 32 that support the rotary spacers 5 on both sides in the axial direction, and an orbital path of the rotary spacers 5 and an orbital path of the roller current collectors 4 are different from each other.

## Description

### {TECHNICAL FIELD}

The present invention relates to a rotary connector, for example, a rotary connector for electrically connecting a turning side element and a stationary side element in a turning mechanism.

### {BACKGROUND ART}

In a rotary connector utilized for electrically connecting a turning side element and a stationary side element in a turning mechanism in various industrial fields, it is possible to electrically connect a conductive inner peripheral electrode to be coupled to the turning side element and a conductive outer peripheral electrode to be electrically connected to the stationary side element through a current collector element arranged between the inner peripheral electrode and the outer peripheral electrode.

As such a rotary connector, a rotary connector in which liquid metal of mercury, gallium alloy, etc., is charged as a current collector element, and a rotary connector in which a plurality of roller current collectors having a power distribution property are arranged are known. In recent years, from a viewpoint of an environmental load due to liquid leakage, an electrical leakage risk, etc., the rotary connector in which the roller current collectors are applied has attracted attention.

For example, in a rotary connector shown in Patent Citation 1, an inner peripheral electrode is rotatably inserted into a cylindrical outer peripheral electrode. Between the outer peripheral electrode and the inner peripheral electrode, cylindrical conductive rings that are capable of being elastically deformed in the radial direction are arranged at equal intervals, and a columnar retainer spacer is arranged between the conductive rings. When the inner peripheral electrode and the outer peripheral electrode are relatively rotated, following this, the conductive rings perform planetary motion of orbiting on the inner peripheral electrode while spinning, while being capable of electrically connecting the inner peripheral electrode and the outer peripheral electrode. Also, each retainer spacer performs planetary motion following the planetary motion of the conductive rings, and functions to keep a gap between the conductive rings in the circumferential direction.

### {CITATION LIST}

### {Patent Literature}

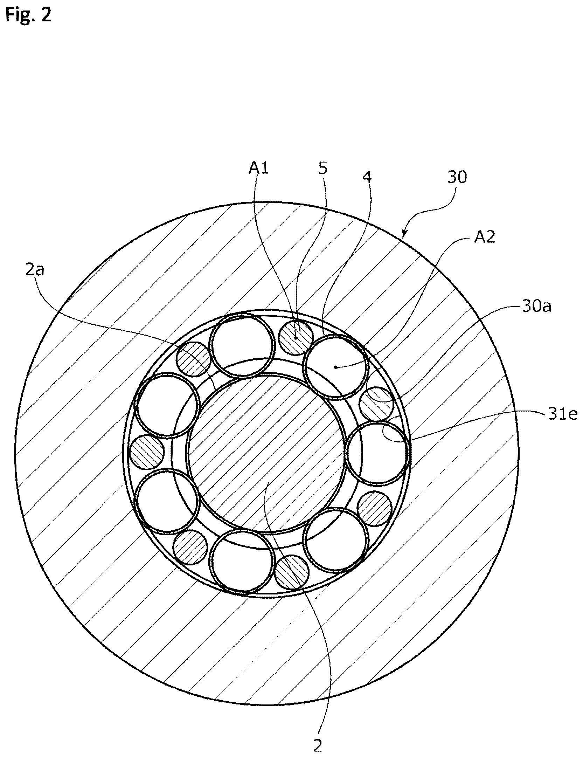

Patent Citation 1: International Publication No. 2008/12875 (Page 6, FIG. 2)

### {SUMMARY OF INVENTION}

### {Technical Problem}

However, in the rotary connector of Patent Citation 1, the conductive rings and the retainer spacers have the same diameter and are arranged on the same orbital path, and at the time of relative rotation of the outer peripheral electrode and the inner peripheral electrode, the retainer spacers are pushed out to the outer peripheral electrode side or the inner peripheral electrode side by spinning motion of the conductive rings. Therefore, there is a problem that friction between the retainer spacers and the outer peripheral electrode or the inner peripheral electrode becomes excessively large.

The present invention has been achieved focusing on such a problem, and an object of the present invention is to provide a rotary connector in which relative movement between a rotary spacer and an outer peripheral electrode or an inner peripheral electrode is favorable.

### {Solution to Problem}

In order to solve the foregoing problem, a rotary connector according to the present invention is a rotary connector including an outer peripheral electrode formed in annular shape, an inner peripheral electrode inserted into the outer peripheral electrode and arranged so as to be turnable relatively to the outer peripheral electrode, a plurality of roller current collectors arranged in a circumferential direction between the outer peripheral electrode and the inner peripheral electrode, the roller current collectors being in contact with the outer peripheral electrode and the inner peripheral electrode, rotary spacers each of which is arranged between the roller current collectors, and a pair of guide plates that support the rotary spacers on both sides in the axial direction, wherein an orbital path of the rotary spacers and an orbital path of the roller current collectors are different from each other. According to the aforesaid feature of the present invention, movement of the rotary pacers to the radially other side is allowed against an elastic force of the roller current collectors. Thus, it is possible to smoothen relative movement between the rotary spacers and the outer peripheral electrode or the inner peripheral electrode.

It may be preferable that a regulation wall for regulation of a radial direction is provided in at least one of the guide plates, the regulation wall is arranged on a radially outer side of the inner peripheral electrode in the radial direction or on a radially inner side of the outer peripheral electrode in the radial direction, and the rotary spacer has a first abutment portion to be abutted with the regulation wall and a second abutment portion to be abutted with the roller current collector, the second abutment portion being placed at a position different from the first abutment portion in the axial direction. According to this preferable configuration, it is possible to arrange the rotary spacer so that the second abutment portion to be abutted with the roller current collector is not abutted with the outer peripheral electrode or the inner peripheral electrode.

It may be preferable that the rotary spacer is abutted with one of the roller current collectors which are adjacent in the circumferential direction, and has a gap from the roller current collector on an opposite side in the circumferential direction. According to this preferable configuration, it is possible to suppress excessive abrasion between the rotary spacer and the roller current collector.

It may be preferable that the rotary spacer is longer than the roller current collector in the axial direction. According to this preferable configuration, it is possible to stabilize arrangement of the roller current collector.

It may be preferable that the rotary spacer and the roller current collector are formed in shapes having peripheral surfaces each of which extends in the axial direction, and the peripheral surfaces are be in contact with each other in the axial direction. According to this preferable configuration, since the peripheral surfaces of the rotary spacer and roller current collector are in contact with each other in the axial direction, it is possible to stabilize the arrangement of the roller current collector more.

It may be preferable that an edge portion of an end portion of the rotary spacer is chamfered. According to this preferable configuration, it is possible to suppress the edge portion of the rotary spacer from being broken during planetary motion of the rotary spacer.

It may be preferable that an edge portion of an end portion of the roller current collector is chamfered. According to this preferable configuration, it is possible to suppress the edge portion of the roller current collector from being brought into contact with the rotary spacer and broken even when relative inclination is generated between the roller current collector and the rotary spacer.

According to an eighth aspect of the present invention, a regulation wall for regulation of a radial direction is provided in at least one of the guide plates, and in the rotary spacer, a first abutment portion to be abutted with the regulation wall has a larger diameter than a second abutment portion to be abutted with the roller current collector. According to this preferable configuration, it is possible to easily and conveniently separate the second abutment portion to be abutted with the roller current collector in the rotary spacer from the outer peripheral electrode or the inner peripheral electrode.

It may be preferable that a regulation wall for regulation of the radial direction is provided in at least one of the guide plates, and in a peripheral surface of the rotary spacer, a circumferential length between two contact portions with the roller current collectors on an opposite side of the regulation wall for regulation of a radial direction is less than one half of a circumferential length of the rotary spacer. According to this preferable configuration, the rotary spacer does not easily fall out to the opposite side of the regulation wall.

### {BRIEF DESCRIPTION OF DRAWINGS}

FIG. 1 is a cross-sectional view illustrating a rotary connector according to a first embodiment of the present invention.
FIG. 2 is a cross-sectional view by the line A-A of FIG. 1.
FIG. 3 is a radially cross-sectional view illustrating a state in which an inner peripheral electrode and an outer peripheral electrode are relatively rotated from the state of FIG. 2.
FIG. 4 is an enlarged axially cross-sectional view illustrating a rotary spacer according to a second embodiment of the present invention.
FIG. 5 is a radially cross-sectional view illustrating a rotary connector according to a third embodiment of the present invention.
FIG. 6 is a radially cross-sectional view illustrating a rotary connector according to a fourth embodiment of the present invention.
FIG. 7 is a radially cross-sectional view illustrating a rotary connector according to a fifth embodiment of the present invention.
FIG. 8A is a schematic view illustrating a rotary spacer of a rotary connector according to a sixth embodiment of the present invention; and FIGS. 8B to 8F are schematic views illustrating modified examples of the rotary spacer.
FIG. 9A is a schematic view illustrating a roller current collector of a rotary connector according to a seventh embodiment of the present invention; and FIGS. 9B to 9D are schematic views illustrating modified examples of the roller current collector.
FIG. 10A is a schematic view illustrating a roller current collector of a rotary connector according to an eighth embodiment of the present invention; and FIG. 10B is a schematic view illustrating a modified example of the roller current collector.
FIG. 11A is an enlarged axially cross-sectional view illustrating a rotary spacer of a rotary connector according to a ninth embodiment of the present invention; and FIG. 11B is a radially cross-sectional view of the same rotary spacer.

### {DESCRIPTION OF EMBODIMENTS}

Modes for implementing a rotary connector according to the present invention will be described based on embodiments.

### {First Embodiment}

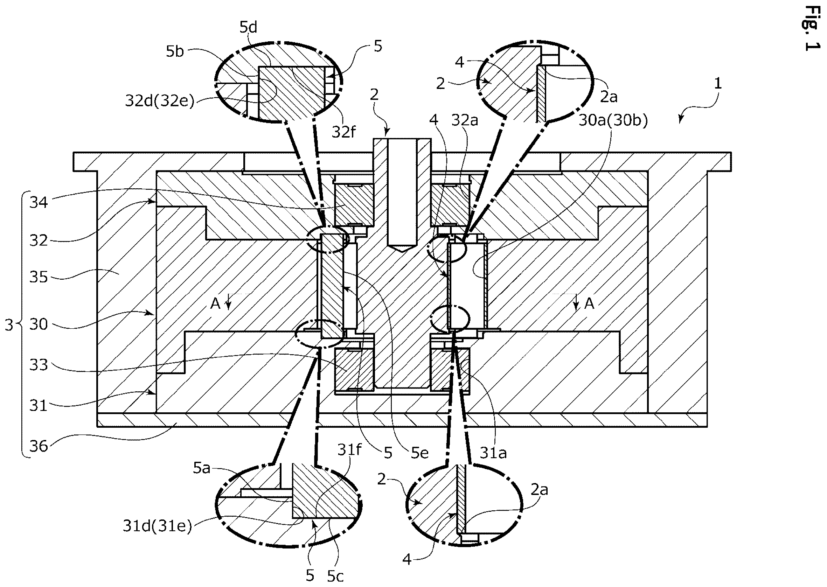

A rotary connector according to a first embodiment of the present invention will be described with reference to FIGS. 1 to 3. Hereinafter, a description will be given with the upper and lower sides seen from the front side of FIG. 1 serving as the upper and lower sides of the rotary connector.

A rotary connector 1 according to the first embodiment is placed vertically, and for example, used in a turning point in a turning mechanism. The rotary connector 1 distributes electric power supplied from an external power source to a turning shaft in the turning mechanism.

As illustrated in FIG. 1, the rotary connector 1 is mainly configured by an inner peripheral electrode 2 serving as a turning side element, a stationary side element 3, roller current collectors 4, and rotary spacers 5.

The inner peripheral electrode 2 is coupled to a turning shaft (not illustrated) in the turning mechanism. The inner peripheral electrode 2 is provided so as to be turnable relatively to the stationary side element 3 by being driven to follow the turning shaft. It is noted that the inner peripheral electrode 2 may be hollow.

The roller current collectors 4 are provided so as to be capable of performing planetary motion around the inner peripheral electrode 2 while being in electrical contact with the inner peripheral electrode 2 and an outer peripheral electrode 30 of the stationary side element 3, following turning of the inner peripheral electrode 2.

Also, the stationary side element 3 is capable of being coupled to the external power source (not illustrated).

The inner peripheral electrode 2 is made of metal, etc., and has a conductive property. In an up-down central portion on an outer peripheral surface of the inner peripheral electrode 2, an annular recessed portion 2a recessed on the radially inner side is formed. It is noted that an inclination angle made by a wall surface and a bottom surface in the axial direction of this annular recessed portion 2a preferably exceeds 0 degrees and is less than 90 degrees. This angle may be generally set from an aspect of processing cost, and for example when assuming processing in a lathe, may be freely set within a range approximately from 30 degrees to 60 degrees to match with a cutting edge angle of a tool bit. In general, since a gravitational force that the roller current collector 4 receives is sufficiently smaller than a spring force at the time of elastic deformation, there is no problem with inclination of approximately 30 degrees. It is noted that although the annular recessed portion 2a in the embodiment is formed on the outer peripheral surface of the inner peripheral electrode, the annular recessed portion 2a may be formed on an inner peripheral surface of the outer peripheral electrode or may be formed on both the peripheral surfaces. Also, instead of the annular recessed portion, annular step portions may be respectively provided in the inner peripheral electrode and the outer peripheral electrode so as to oppose each other in the axial direction, and by arranging the roller current collectors between these annular step portions so that the roller current collectors intervene the annular step portions, the roller current collectors may be held in the axial direction.

Also, highly conductive plating of, for example, silver, etc., is provided onto the outer peripheral surface of the inner peripheral electrode 2. It is noted that since the plating is thin and the figure would be complicated, the plating is not illustrated in the figure The same applies to plating of the following description.

Next, the stationary side element 3 will be described. The stationary side element 3 is mainly configured by the outer peripheral electrode 30, a lower side guide plate 31, an upper side guide plate 32, a lower side bearing 33, an upper side bearing 34, a housing 35, and a cover 36.

The outer peripheral electrode 30 is made of a highly conductive material and formed in a cylindrical shape. Highly conductive plating of, for example, silver, etc., is provided onto an inner peripheral surface of the outer peripheral electrode 30.

The lower side guide plate 31 has a recessed portion 31a opening on the upper side in center, and is arranged in a lower portion of the outer peripheral electrode 30. The recessed portion 31a of the lower side guide plate 31 communicates with a through hole 30a of the outer peripheral electrode 30 in the up and down direction. Also, the lower side bearing 33 is fitted into the recessed portion 31a of the lower side guide plate 31.

A recess portion 31d opening on the upper side is formed in an upper side edge portion of the recessed portion 31a of the lower side guide plate 31. A peripheral surface 31e serving as a regulation wall of this recess portion 31d is arranged on the radially inner side of an inner peripheral surface 30b of the outer peripheral electrode 30.

The upper side guide plate 32 is formed in a tubular shape. The upper side bearing 34 is fitted into a through hole 32a of the upper side guide plate 32.

The through hole 32a has a smaller diameter than the through hole 30a of the outer peripheral electrode 30. A recess portion 32d opening on the lower side is formed in a periphery of the through hole 32a. A peripheral surface 32e serving as a regulation wall of this recess portion 32d is arranged on the radially inner side of the inner peripheral surface 30b of the outer peripheral electrode 30.

The housing 35 is formed to have a downward U-shaped section. Also, the cover 36 is formed in a thin plate shape.

The upper side guide plate 32 and the lower side guide plate 31 are fitted into the housing 35. The cover 36 is fixed to a lower end of a tubular portion in the housing 35 with a bolt.

Next, the roller current collector 4 will be described. As illustrated in FIGS. 1 and 2, the roller current collector 4 is made of metal, etc., highly conductive, capable of being elastically deformed, and formed in a cylindrical shape. Also, highly conductive plating of, for example, silver, etc., is provided onto an outer peripheral surface of the roller current collector 4.

The roller current collector 4 is arranged between the inner peripheral electrode 2 and the outer peripheral electrode 30 in a state of being compressed in the radial direction. Thereby, the roller current collector 4 is maintained in a state of contact with the inner peripheral electrode 2 and the outer peripheral electrode 30.

Also, a part of the roller current collector 4 on the inner peripheral electrode 2 side is fitted to the annular recessed portion 2a of the inner peripheral electrode 2. Thereby, movement in the up and down direction of the roller current collector 4 is regulated.

It is noted that in the present embodiment, the seven roller current collectors 4 are arranged at equal intervals in the circumferential direction. It is noted that the number of the roller current collectors 4 can be freely changed as long as the number is not less than two.

Next, the rotary spacer 5 will be described. The rotary spacer 5 is made of insulating resin. The rotary spacer 5 is formed in a columnar shape elongated in the up and down direction. The rotary spacer 5 is longer than the roller current collector 4 in the axial direction. The rotary spacer 5 is formed to have a smaller diameter than the roller current collector 4.

A central axis A1 of this rotary spacer 5 is arranged on the radially outer side of a central axis A2 of the roller current collector 4.

A lower end portion 5a and an upper end portion 5b of the rotary spacer 5 are in contact with the peripheral surface 31e of the lower side guide plate 31 and the peripheral surface 32e of the upper side guide plate 32 at positions on the radially outer side of the central axis A1. That is, by being arranged in contact with the peripheral surface 31e of the lower side guide plate 31 and the peripheral surface 32e of the upper side guide plate 32, the rotary spacer 5 is arranged to be separated from the inner peripheral surface 30b of the outer peripheral electrode 30 on the radially inner side.

In other words, the lower end portion 5a and the upper end portion 5b of the rotary spacer 5 function as first abutment portions to be abutted with the peripheral surface 31e of the lower side guide plate 31 and the peripheral surface 32e of the upper side guide plate 32.

Also, a lower end surface 5c and an upper end surface 5d of the rotary spacer 5 are in contact with a bottom surface 31f of the recess portion 31d and a bottom surface 32f of the recess portion 32d. It is noted that the upper end surface 5d of the rotary spacer 5 may not be in contact with the bottom surface 32f of the recess portion 32d.

Also, an axially central portion 5e of the rotary spacer 5 is in contact with the roller current collector 4 on one side among the roller current collectors 4, 4 which are adjacent to each other at a position on the radially inner side of the central axis A1, and separated from the roller current collector 4 on the other side.

It is noted that in FIG. 2, for convenience of description, the mode in which each of all the rotary spacers 5 is in contact with the roller current collector 4 on one side and separated from the roller current collector 4 on the other side is exemplified. However, in reality, some of the rotary spacers 5 may be in contact with the roller current collectors 4 on both the sides. This is because the adjacent roller current collectors 4 can be brought close to or separated from each other in the circumferential direction by a gap between the rotary spacer 5 and the roller current collector 4.

Peripheral surfaces of the rotary spacer 5 and the roller current collector 4 are in contact with each other in the axial direction. In other words, the axially central portion 5e of the rotary spacer 5 functions as a second abutment portion to be abutted with the roller current collector 4.

In such a way, the rotary spacer 5 is in contact with the peripheral surface 31e of the lower side guide plate 31 and the peripheral surface 32e of the upper side guide plate 32, and at least the roller current collector 4 on one side among the adjacent roller current collectors 4, 4.

In the peripheral surface of the rotary spacer 5 in contact with the roller current collectors 4, 4 on both the sides, a length on the radially inner side between two contact portions of the rotary spacer 5 and the roller current collectors 4, 4 is less than a half perimeter. Thereby, the rotary spacer 5 does not easily fall out to the inner peripheral electrode 2 side. Also, fall-out of the rotary spacer 5 to the outer peripheral electrode 30 side is regulated by the peripheral surface 31e of the lower side guide plate 31 and the peripheral surface 32e of the upper side guide plate 32.

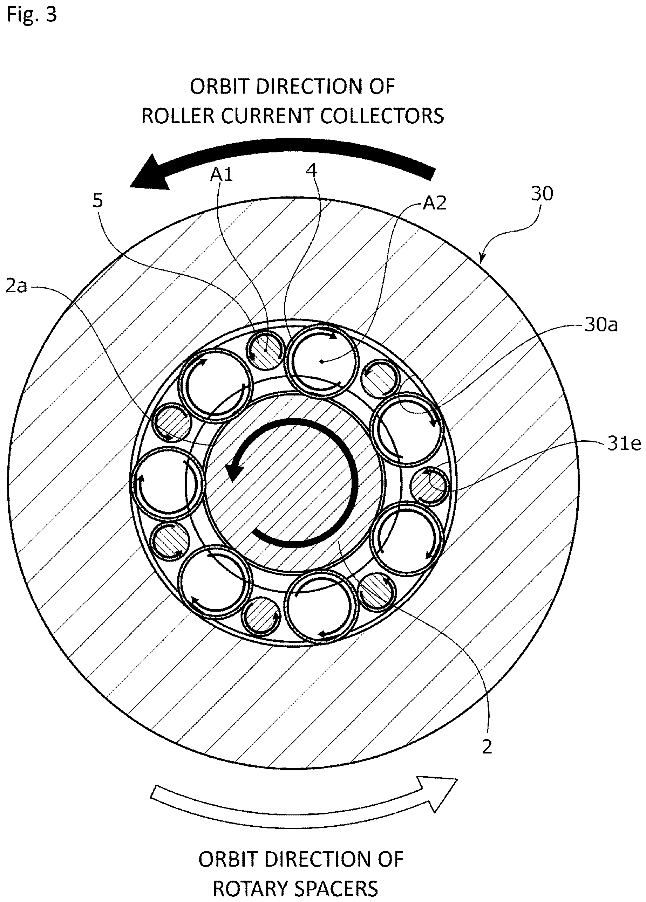

Next, the planetary motion of the roller current collector 4 and the rotary spacer 5 at the time of rotation of the inner peripheral electrode 2 will be described. As illustrated in FIG. 3, when the turning shaft in the turning mechanism is rotated, the inner peripheral electrode 2 is also rotated following the rotation. Upon receiving the rotation of the inner peripheral electrode 2, each roller current collector 4 orbits in the rotation direction of the inner peripheral electrode 2 while spinning in the direction opposite to the rotation direction of the inner peripheral electrode 2 (see a bold black arrow).

Also, upon receiving the spinning of each roller current collector 4, each rotary spacer 5 orbits in the direction which is identical to the orbit direction of the roller current collector 4 while spinning in the direction opposite to the spinning direction of the roller current collector 4 (see a bold white arrow).

At the time of the rotation of the inner peripheral electrode 2, since a minute rotation difference is generated between the roller current collectors 4, a force may act in the direction in which the adjacent roller current collectors 4 are separated from or brought close to each other in the circumferential direction. However, a gap in the circumferential direction between the adjacent roller current collectors 4 is maintained by the rotary spacers 5. Thereby, power distribution between the inner peripheral electrode 2 and the outer peripheral electrode 30 via each roller current collector 4 is stabilized.

Also, when the rotation difference is generated between the roller current collectors 4, a force may act on the rotary spacers 5 so that the rotary spacers 5 are pushed out to the radially outer side or the radially inner side. The rotary spacer 5 of the present embodiment is placed between the peripheral surface 31e of the lower side guide plate 31 and the peripheral surface 32e of the upper side guide plate 32, and the roller current collectors 4, 4 adjacent to each other in the circumferential direction. That is, an orbital path of the rotary spacer 5 and an orbital path of the roller current collectors 4 are different from each other, and movement of the rotary spacer 5 in the radially inner direction is allowed against an elastic force of the roller current collectors 4. Thus, excessive abrasion between the rotary spacer 5 and the peripheral surface 31e of the lower side guide plate 31 and the peripheral surface 32e of the upper side guide plate 32 on the radially outer side is avoided, and the planetary motion of the rotary spacer 5 is smoothened.

Also, the rotary spacer 5 includes the lower end portion 5a and the upper end portion 5b to be abutted with the peripheral surface 31e of the lower side guide plate 31 and the peripheral surface 32e of the upper side guide plate 32, and the axially central portion 5e of the rotary spacer 5 to be abutted with the roller current collector 4. Thus, it is possible to arrange the rotary spacer 5 so that the axially central portion 5e of the rotary spacer 5 is not abutted with the outer peripheral electrode 30. Thereby, the outer peripheral electrode 30 is not easily damaged. Also, it is possible to configure the rotary spacer 5, the lower side guide plate 31, and the upper side guide plate 32 by a combination of materials that are not easily damaged by abrasion.

Also, the peripheral surface 31e of the lower side guide plate 31 and the peripheral surface 32e of the upper side guide plate 32 are arranged on the radially inner side of the inner peripheral surface 30b of the outer peripheral electrode 30. Thus, it is possible to use and arrange the rotary spacer 5 of a simple columnar structure without abutting with the outer peripheral electrode 30.

Also, the peripheral surface 31e of the lower side guide plate 31 and the peripheral surface 32e of the upper side guide plate 32 are arranged on the radially outer side of the rotary spacer 5. According to this, it is possible to ensure a large diameter of the rotary spacer 5. Thus, it is possible to make a rotation difference between the rotary spacer 5 and the roller current collectors 4 as small as possible.

Also, the peripheral surfaces of the rotary spacer 5 and the roller current collector 4 on one side are in contact with each other in the axial direction. Thus, it is possible to suppress inclination of the roller current collector 4, and it is possible to stabilize arrangement of the roller current collector 4. That is, it is possible to maintain a favorable power distribution property of the inner peripheral electrode 2 and the outer peripheral electrode 30 via the roller current collector 4.

Also, there is a gap in the circumferential direction between the rotary spacer 5 and the roller current collector 4 on the other side. Thus, it is possible to reduce transmission of a rotation speed difference between the adjacent roller current collectors 4 and a load in the rotation direction to the rotary spacer 5, and it is possible to suppress excessive abrasion between the rotary spacer 5 and the roller current collector 4.

Also, the central axis A1 of the rotary spacer 5 and the central axis A2 of the roller current collector 4 are arranged while being displaced from each other in the radial direction. Thus, a force does not easily act in the orbit direction of the roller current collector 4, and it is possible to suppress excessive deformation of the roller current collector 4 and hold intervals of the roller current collectors 4.

Also, the rotary spacers 5 and the roller current collectors 4 are arranged alternately in the circumferential direction. Thus, it is possible to efficiently transmit the planetary motion of the roller current collectors 4 to the rotary spacers 5.

It is noted that although the mode in which the planetary motion of the rotary spacers 5 is guided by the peripheral surface 31e of the lower side guide plate 31 and the peripheral surface 32e of the upper side guide plate 32 is exemplified in the present embodiment, a regulation wall may be formed at least only on the lower side.

### {Second Embodiment}

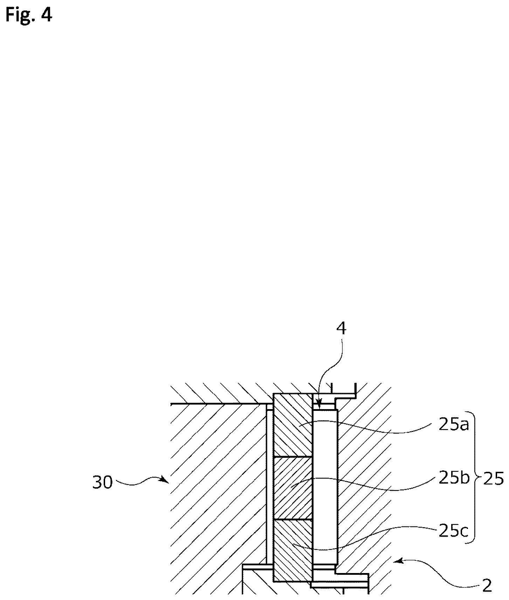

Next, a rotary connector according to a second embodiment of the present invention will be described with reference to FIG. 4. It is noted that a description of the same and duplicated configurations as the first embodiment will be omitted.

As illustrated in FIG. 4, a rotary spacer 25 of the present embodiment is configured by three divided bodies 25a, 25b, 25c.

These divided bodies 25a, 25b, 25c may be fixed to each other, or may be attached to a shaft that extends in the up and down direction so that the divided bodies 25a, 25b, 25c can be respectively relatively rotated about the shaft.

### {Third Embodiment}

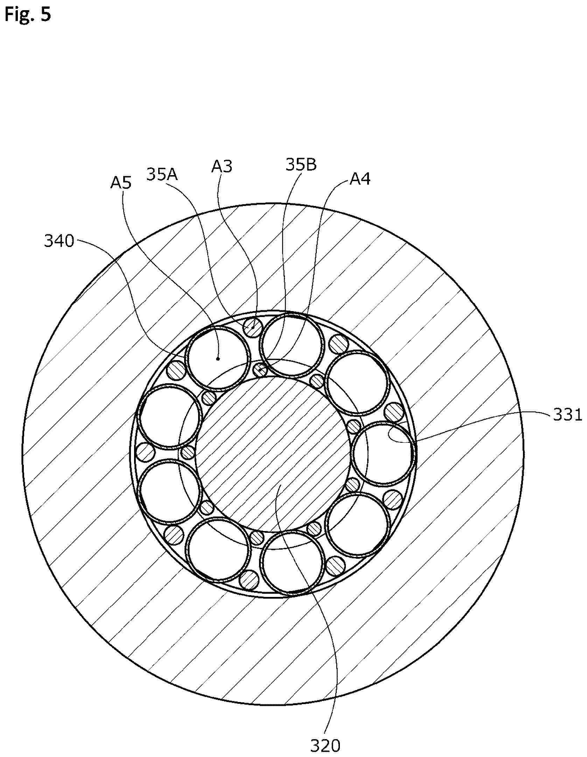

Next, a rotary connector according to a third embodiment of the present invention will be described with reference to FIG. 5. It is noted that a description of the same and duplicated configurations as the first embodiment will be omitted.

As illustrated in FIG. 5, in the rotary connector of the present embodiment, rotary spacers 35A, 35B are arranged between adjacent roller current collectors 340, 340.

A central axis A3 of the rotary spacer 35A is arranged on the radially outer side of a central axis A5 of the roller current collector 340. In such a way, the rotary spacer 35A is arranged between an up-down regulation wall 331 and the adjacent roller current collectors 340, 340.

A central axis A4 of the rotary spacer 35B is arranged on the radially inner side of the central axis A5 of the roller current collector 340. In such a way, the rotary spacer 35B is arranged between an inner peripheral electrode 320 and the adjacent roller current collectors 340, 340.

The rotary spacers 35A, 35B are separated from each other in the radial direction. It is noted that a diameter of each of the rotary spacers 35A, 35B is designed in consideration of a difference in the rotation number so that planetary motion of the roller current collector 340 is not inhibited.

In such a way, the roller current collectors 340, 340 are reliably regulated from coming close to each other by the rotary spacer 35A on the radially outer side and the rotary spacer 35B on the radially inner side.

It is noted that it is possible to freely change the number of the rotary spacers in the radial direction.

### {Fourth Embodiment}

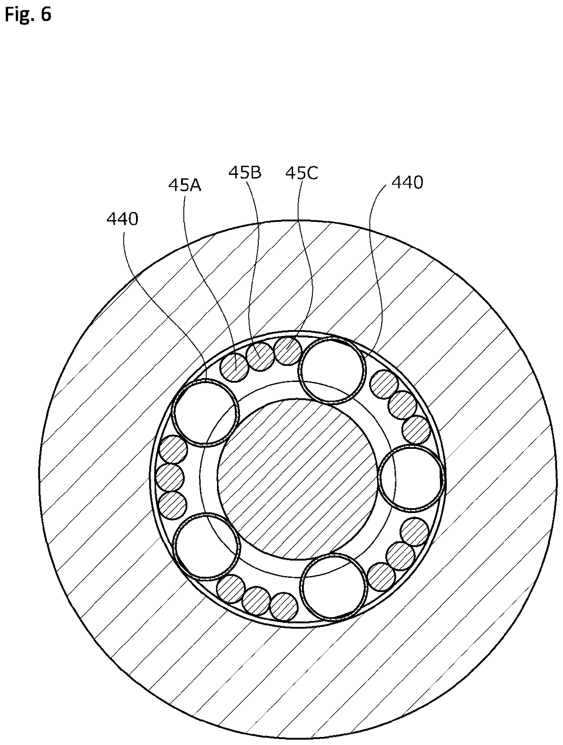

Next, a rotary connector according to a fourth embodiment of the present invention will be described with reference to FIG. 6. It is noted that a description of the same and duplicated configurations as the first embodiment will be omitted.

As illustrated in FIG. 6, in the rotary connector of the present embodiment, three rotary spacers 45A, 45B, 45C are arranged side by side in the circumferential direction between adjacent roller current collectors 440, 440.

It is possible to ensure a gap between the roller current collectors 440, 440 by the three rotary spacers 45A, 45B, 45C. Thus, it is possible to effectively regulate the roller current collectors 440, 440 from coming close to each other. In such a way, the rotary spacer arranged between the roller current collectors 440, 440 is not limited to one but a plurality of rotary spacers may be arranged.

It is noted that it is possible to freely change the number of the rotary spacers arranged side by side in the circumferential direction, but odd-numbered rotary spacers are preferable so that planetary motion of the roller current collectors is not inhibited.

### {Fifth Embodiment}

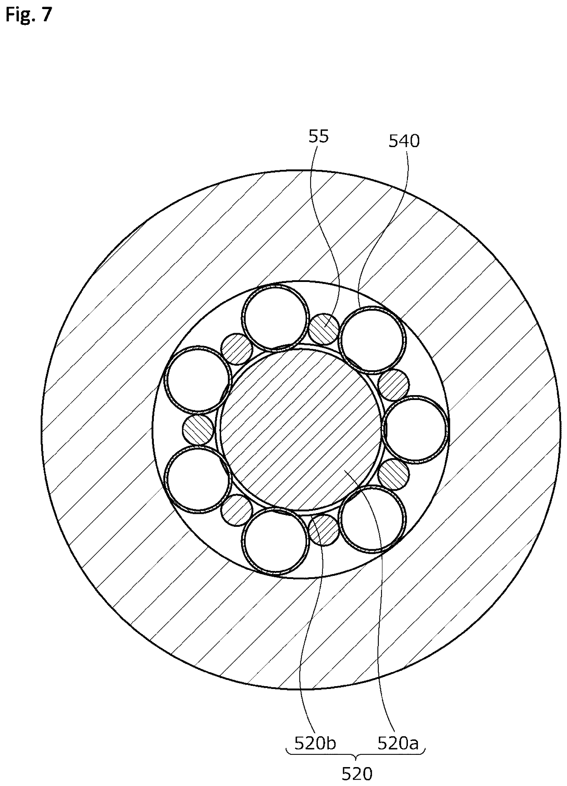

Next, a rotary connector according to a fifth embodiment of the present invention will be described with reference to FIG. 7. It is noted that a description of the same and duplicated configurations as the first embodiment will be omitted.

As illustrated in FIG. 7, an inner peripheral electrode 520 of the rotary connector according to the fifth embodiment is configured by a small diameter portion 520a and a large diameter portion 520b. A roller current collector 540 is in contact with the small diameter portion 520a. A rotary spacer 55 is in contact with the large diameter portion 520b.

In such a way, the rotary spacer 55 is arranged between the large diameter portion 520b of the inner peripheral electrode 520 and the adjacent roller current collectors 540, 540. It is noted that in reality, the rotary spacer 55 is in contact with the roller current collector 540 on one side and is separated from the roller current collector 540 on the other side. However, since a separation width is minute, a gap between the rotary spacer 55 and the roller current collector 540 on the other side is not illustrated in FIG. 7.

### {Sixth Embodiment}

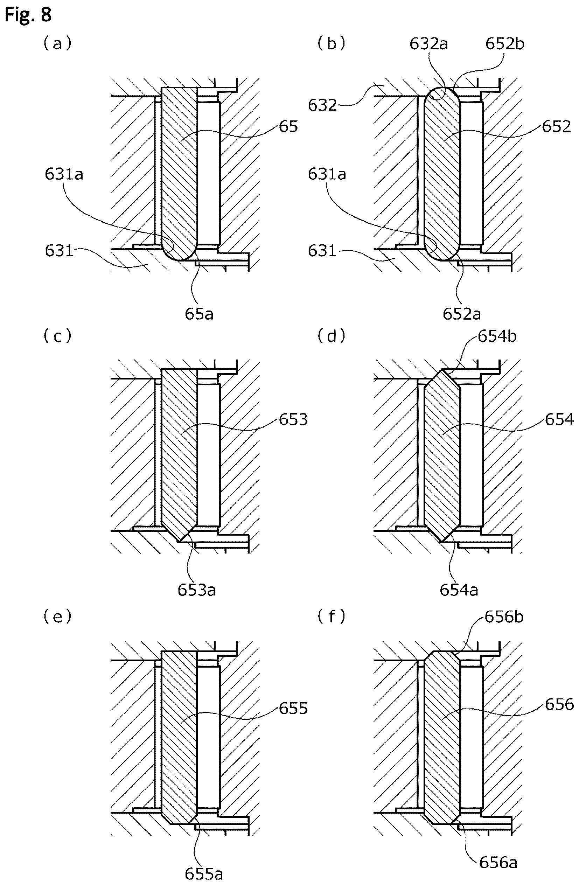

Next, a rotary connector according to a sixth embodiment of the present invention will be described with reference to FIG. 8. It is noted that a description of the same and duplicated configurations as the first embodiment will be omitted.

As illustrated in FIG. 8A, a lower end portion 65a of a rotary spacer 65 is formed in a semispherical shape. That is, an edge portion of the lower end portion 65a of the rotary spacer 65 is chamfered.

A regulation wall 631a of a lower side guide plate 631 has an arc shaped section, and is slidable with respect to the lower end portion 65a of the rotary spacer 65.

According to this, it is possible to suppress the edge portion of the lower end portion 65a of the rotary spacer 65 from being broken during planetary motion of the rotary spacer 65.

It is noted that as illustrated in FIG. 8B, a lower end portion 652a and an upper end portion 652b of a rotary spacer 652 may be formed in a semispherical shape. In this case, the regulation wall 631a of the lower side guide plate 631 and a regulation wall 632a of an upper side guide plate 632 may have an arc shaped section.

Also, as illustrated in FIG. 8C, a lower end portion 653a of a rotary spacer 653 may be formed in a conical shape.

Also, as illustrated in FIG. 8D, a lower end portion 654a and an upper end portion 654b of a rotary spacer 654 may be formed in a conical shape.

Also, as illustrated in FIG. 8E, an edge portion of a lower end portion 655a of a rotary spacer 655 may be chamfered.

Also, as illustrated in FIG. 8F, an edge portion of a lower end portion 656a and an edge portion of an upper end portion 656b of a rotary spacer 656 may be chamfered.

It is noted that in FIGS. 8A to 8F, regulation walls may be provided on the radially inner side and the radially outer side of the rotary spacer. In this case, preferably, the rotary spacer is capable of slightly moving in the radial direction between the regulation walls on both the sides in the radial direction.

### {Seventh Embodiment}

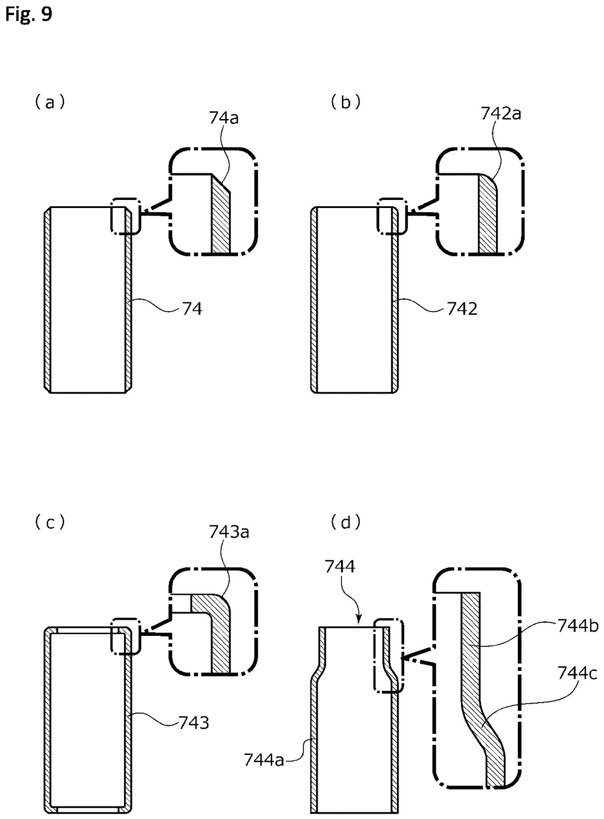

Next, a rotary connector according to a seventh embodiment of the present invention will be described with reference to FIG. 9. It is noted that a description of the same and duplicated configurations as the first embodiment will be omitted.

As illustrated in FIG. 9A, a roller current collector 74 forms tapered surfaces 74a having linear sections in which edge portions of upper and lower end portions are chamfered. It is possible to suppress the edge portions of the roller current collector 74 from being brought into contact with the rotary spacer 5 (see FIG. 1) and broken even when relative inclination is generated between the roller current collector 74 and the rotary spacer 5.

It is noted that as illustrated in FIG. 9B, a tapered surface 742a of a roller current collector 742 may have a curve-shaped section.

Also, as illustrated in FIG. 9C, upper and lower end portions of a roller current collector 743 may be folded on the radially inner side and a curve-shaped chamfered portion 743a may be formed.

Also, as illustrated in FIG. 9D, a roller current collector 744 includes a large diameter portion 744a, a small diameter portion 744b, and a tapered portion 744c connecting the diameter portions, and the tapered portion 744c may be a chamfered portion.

It is noted that the chamfered portion is not limited to be provided on both the upper and lower sides, but may be provided only on any one side. Further, it is noted that the entire roller current collector may be formed in a pyramid shape (for example, a tapered shape).

### {Eighth Embodiment}

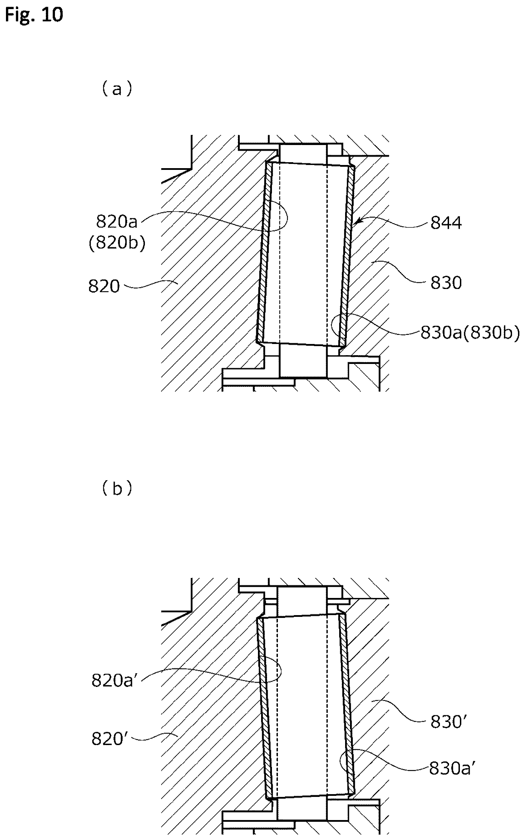

Next, a rotary connector according to an eighth embodiment of the present invention will be described with reference to FIG. 10. It is noted that a description of the same and duplicated configurations as the first embodiment will be omitted.

As illustrated in FIG. 10A, in the rotary connector according to the eighth embodiment, a roller current collector 844 is arranged to be inclined. Specifically, an outer peripheral surface 820a of an inner peripheral electrode 820 is formed in a tapered shape inclined in the radially inner direction toward the lower side. An inner peripheral surface 830a of an outer peripheral electrode 830 is formed in a tapered shape inclined in the radially inner direction toward the lower side. The outer peripheral surface 820a and the inner peripheral surface 830a are parallel. The roller current collector 844 is arranged between the outer peripheral surface 820a and the inner peripheral surface 830a. Also, an annular recessed portion 820b recessed on the radially inner side is formed on the outer peripheral surface 820a of the inner peripheral electrode 820, and an annular recessed portion 830b recessed on the radially outer side is formed on the inner peripheral surface 830a of the outer peripheral electrode 830. The roller current collector 844 is fitted into both the annular recessed portions. It is noted that there is no problem even when the annular recessed portion is provided at least only one of the inner peripheral electrode 820 and the outer peripheral electrode 830 side. Also, instead of the annular recessed portion, annular step portions may be respectively provided in the inner peripheral electrode and the outer peripheral electrode so as to oppose each other in the axial direction, and by arranging the roller current collectors between these annular step portions so that the roller current collectors intervene the annular step portions, the roller current collectors may be held in the axial direction. It is noted that a condition of an inclination angle made by a wall surface and a bottom surface of the annular recessed portion is the same as the first embodiment.

According to this, the roller current collector 844 is supported by the inner peripheral surface 830a of the outer peripheral electrode 830 and stabilized. Thus, the roller current collector 844 is suppressed from falling off in the circumferential direction.

It is noted that as illustrated in FIG. 10B, an outer peripheral surface 820a' of an inner peripheral electrode 820' and an inner peripheral surface 830a' of an outer peripheral electrode 830' may be formed in a tapered shape inclined in the radially outer direction toward the lower side.

It is noted that in the present embodiment, the mode in which the rotary spacer is arranged vertically is exemplified, but the rotary spacer may be inclined similarly to the roller current collector.

### {Ninth Embodiment}

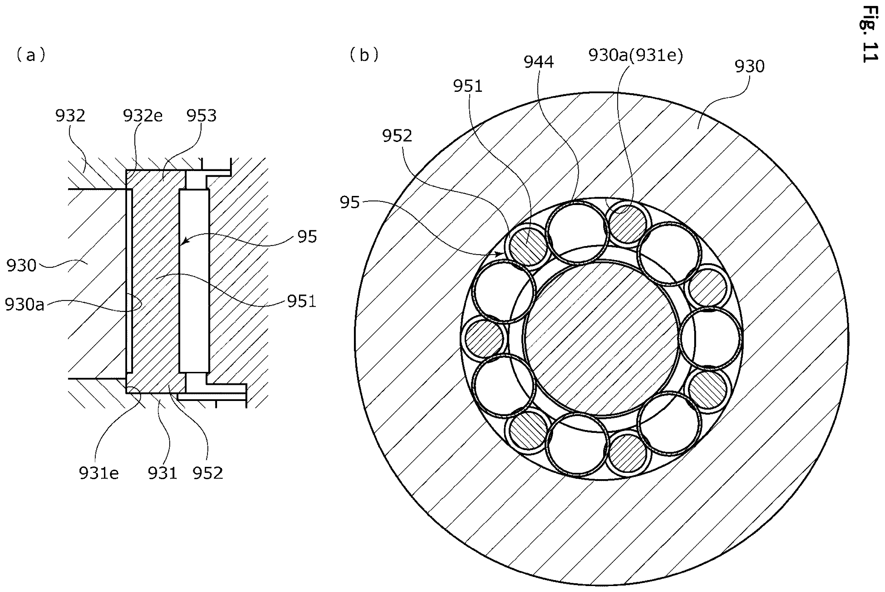

Next, a rotary connector according to a ninth embodiment of the present invention will be described with reference to FIG. 11. It is noted that a description of the same and duplicated configurations as the first embodiment will be omitted.

As illustrated in FIG. 11A, a rotary spacer 95 according to the ninth embodiment is configured by a small diameter portion 951 and large diameter portions 952, 953. The large diameter portion 952 is provided in a lower end portion of the small diameter portion 951. The large diameter portion 953 is provided in an upper end portion of the small diameter portion 951. That is, the rotary spacer 95 is formed in a bobbin shape.

As illustrated in FIGS. 11A and 11B, the large diameter portion 952 is abutted with a regulation wall 931e of a lower side guide plate 931, and the large diameter portion 953 is abutted with a regulation wall 932e of an upper side guide plate 932. That is, the large diameter portions 952, 953 function as first abutment portions to be abutted with the regulation walls. It is noted that the regulation walls 931e, 932e are configured to be flush with an inner peripheral surface 930a of an outer peripheral electrode 930.

Also, the small diameter portion 951 functions as a second abutment portion to be abutted with a roller current collector 944. It is noted that in reality, the small diameter portion 951 is in contact with the roller current collector 944 on one side and is separated from the roller current collector 944 on the other side. However, since a separation width is minute, a gap between the small diameter portion 951 and the roller current collector 944 on the other side is not illustrated in FIG. 11B.

According to this, it is possible to easily and conveniently separate the small diameter portion 951 to be abutted with the roller current collector 944 in the rotary spacer 95 from the outer peripheral electrode 930.

Also, it is possible to bring a central axis of the small diameter portion 951 close to a central axis of the roller current collector 944. Thus, it is possible to make a rotation difference between the rotary spacer 95 and the roller current collector 944 small.

Also, by preparing plural types of rotary spacers having large diameter portions of different diameters, it is possible to adjust a separation width between the small diameter portion 951 and the outer peripheral electrode 930.

The embodiments of the present invention are described above with the drawings. However, specific configurations are not limited to these embodiments and the present invention includes changes and additions within a range not departing from the scope of the present invention.

For example, in the first to ninth embodiments, the mode in which the rotary connector is placed vertically is exemplified. However, the rotary connector may be placed horizontally.

Also, in the first to ninth embodiments, the mode in which the first abutment portion to be abutted with the regulation wall and the second abutment portion to be abutted with the roller current collector are arranged while being displaced in the up and down direction in the rotary spacer is exemplified. However, the first abutment portion and the second abutment portion may be provided at the same height.

Also, in the first to ninth embodiments, the mode in which the rotary spacer is formed in a columnar shape is exemplified. However, the rotary spacer may be formed in a shape having a peripheral surface that extends in the axial direction. For example, the rotary spacer may be formed in a cylindrical shape, a polygonal shape that is close to a column or a cylinder, a spherical shape, a barrel shape, etc.

Also, in the first to ninth embodiments, the mode in which the roller current collector is formed in a columnar shape is exemplified. However, the roller current collector may be formed in a shape having a peripheral surface that extends in the axial direction. For example, the roller current collector may be formed in a cylindrical shape, a polygonal shape that is close to a column or a cylinder, a barrel shape, a tube shape, a pyramid shape (for example, a tapered shape), etc.

Also, in the first to ninth embodiments, the mode in which the peripheral surfaces of the rotary spacer and the roller current collector are in linear contact with each other in the axial direction is exemplified. However, the peripheral surfaces may be in point contact with each other.

Also, in the first to ninth embodiments, the mode in which the inner peripheral electrode is rotated is exemplified. However, the outer peripheral electrode may be rotated.

Also, the inner peripheral electrode may be hollow.

### {REFERENCE SIGNS LIST}

- 1: Rotary connector
- 2: Inner peripheral electrode
- 4: Roller current collector
- 5: Rotary spacer
- 5a: Lower end portion (first abutment portion)
- 5b: Upper end portion (first abutment portion)
- 5e: Axially central portion (second abutment portion)
- 30: Outer peripheral electrode
- 31: Lower side guide plate
- 31e: Peripheral surface (regulation wall)
- 32: Upper side guide plate
- 32e: Peripheral surface (regulation wall)

## Claims

1. A rotary connector comprising:
an outer peripheral electrode formed in annular shape;
an inner peripheral electrode inserted into the outer peripheral electrode and arranged so as to be turnable relatively to the outer peripheral electrode;
a plurality of roller current collectors arranged in a circumferential direction between the outer peripheral electrode and the inner peripheral electrode, the roller current collectors being in contact with the outer peripheral electrode and the inner peripheral electrode;
rotary spacers each of which is arranged between the roller current collectors; and
a pair of guide plates that support the rotary spacers on both sides in the axial direction,
wherein an orbital path of the rotary spacers and an orbital path of the roller current collectors are different from each other.

2. The rotary connector according to claim 1,
wherein a regulation wall for regulation of a radial direction is provided in at least one of the guide plates,
the regulation wall is arranged on a radially outer side of the inner peripheral electrode in the radial direction or on a radially inner side of the outer peripheral electrode in the radial direction, and
the rotary spacer has a first abutment portion to be abutted with the regulation wall and a second abutment portion to be abutted with the roller current collector, the second abutment portion being placed at a position different from the first abutment portion in the axial direction.

3. The rotary connector according to claim 1,
wherein the rotary spacer is abutted with one of the roller current collectors which are adjacent in the circumferential direction, and has a gap from the roller current collector on an opposite side in the circumferential direction.

4. The rotary connector according to claim 1,
wherein the rotary spacer is longer than the roller current collector in the axial direction.

5. The rotary connector according to any one of claims 1 to 4,
wherein the rotary spacer and the roller current collector are formed in shapes having peripheral surfaces each of which extends in the axial direction, and the peripheral surfaces are in contact with each other in the axial direction.

6. The rotary connector according to claim 1,
wherein an edge portion of an end portion of the rotary spacer is chamfered.

7. The rotary connector according to claim 1,
wherein an edge portion of an end portion of the roller current collector is chamfered.

8. The rotary connector according to claim 1,
wherein a regulation wall for regulation of a radial direction is provided in at least one of the guide plates, and
in the rotary spacer, a first abutment portion to be abutted with the regulation wall has a larger diameter than a second abutment portion to be abutted with the roller current collector.

9. The rotary connector according to claim 1,
wherein a regulation wall for regulation of the radial direction is provided in at least one of the guide plates, and
in a peripheral surface of the rotary spacer, a circumferential length between two contact portions with the roller current collectors on an opposite side of the regulation wall for regulation of a radial direction is less than one half of a circumferential length of the rotary spacer.
